# EUROPÄISCHE PATENTSCHRIFT

(11) **EP 2 640 968 B1**
(45) Veröffentlichungstag und Bekanntmachung des Hinweises auf die Patenterteilung: **12.11.2014**
(21) Anmeldenummer: 11785343.2
(22) Anmeldetag: 16.11.2011
(51) Int. Cl.: F03D 7/02

(54) **VORRICHTUNG FÜR DIE DREHUNG DER MASCHINENGONDEL EINER WINDENERGIEANLAGE**
APPARATUS FOR ROTATING THE MACHINE POD OF A WIND POWER PLANT
DISPOSITIF D'ORIENTATION DE LA NACELLE D'UNE ÉOLIENNE

(30) Priorität: 10.12.2010 DE 102010054153
(43) Veröffentlichungstag der Anmeldung: 25.09.2013
(73) Patentinhaber: Senvion SE, 22297 Hamburg (DE)
(72) Erfinder: TREDE, Alf, 25885 Immerstedt (DE); BRÜCKNER, Matthias, 24768 Rendsburg (DE)
(74) Vertreter: Hausfeld, Norbert
(86) Internationale Anmeldenummer: PCT/EP2011/005764
(87) Internationale Veröffentlichungsnummer: WO 2012/076113

(56) Entgegenhaltungen:
- EP-A2- 1 650 431
- DE-A1-102008 004 948
- JP-A- 2006 307 653

## Beschreibung

Die vorliegende Erfindung betrifft eine Vorrichtung zur Drehung der Maschinengondel einer Windenergieanlage.

Windenergieanlagen gewinnen elektrische Energie aus der Strömungsenergie des Windes. Als häufigste Bauart von Windkraftanlagen sind Anlagen anzutreffen, die eine im Wesentlichen waagerecht angeordnete Rotorwelle aufweisen, die mit einem mit zwei oder drei Rotorblättern ausgestatteten Rotor verbunden ist. Die Drehbewegung des Rotors wird über die Rotorwelle und ggf. weitere Antriebsstrangkomponenten unter Zuhilfenahme eines Generators in elektrische Energie umgesetzt. Die Komponenten des Antriebsstrangs und die elektrischen Komponenten sind in einer Maschinengondel angeordnet, die von einem Turm getragen wird. Die Maschinengondel ist dabei drehbar auf dem Turm gelagert, damit der Rotor bei sich ändernden Windrichtungen dem Wind nachgeführt werden kann, indem die Maschinengondel gegenüber dem Turm verdreht wird. Für die Nachführung werden überwiegend aktive Systeme eingesetzt, die mehrere Motoren aufweisen, die mittels eines Wind-Messsystems, z.B. eine auf der Gondel angebrachte Windfahne, und der damit ermittelten Windrichtung angesteuert werden. Bei diesen Azimutmotoren handelt es sich um hydraulische oder elektrische Motoren.

Ziel der Windrichtungsnachführung der Maschinengondel ist eine optimale Ausrichtung des Rotors zum Wind. Die Windrichtungsnachführung darf aber nicht zu sensitiv reagieren, was nämlich permanent kleine Nachführungsbewegungen zur Folge hätte. Die Lebensdauer der mechanischen Komponenten wäre deutlich reduziert. Daher wird in der Regel mit zeitlichen Mittelwerten bei der Windrichtungserfassung gearbeitet, und eine Nachführung erst ausgelöst, wenn ein bestimmter Differenzwinkel zwischen Ist-Stellung und optimaler Stellung zum Wind festgestellt wird. Dieser Differenzwinkel wird als Gierwinkel bezeichnet.

Ein Windrichtungsnachführsystem umfasst mehrere unterschiedliche Komponenten wie beispielsweise eine Gondellagerung, einen oder mehrere Azimutmotoren zur Drehung der Maschinengondel, eine oder mehrere meist hydraulische Bremsen, ggf. eine Verriegelungseinrichtung, sowie ein elektronisches Regelungssystem. Diese unterschiedlichen Komponenten sind je nach Ausführungsform entweder an bzw. in der Maschinengondel oder an bzw. in dem Turm angeordnet.

Die Gondellagerung erfolgt üblicherweise über ein Wälzlager ("Kugellager"), das zwischen einem verzahnten turmfesten Lagerring und einem Lagerring an der Grundplatte des Maschinenhauses angeordnet ist. Weiterhin sind auf dem Maschinenhaus in der Regel mehrere Antriebsmotoren mit Untersetzungsgetriebe feststehend montiert, die jeweils über ein Antriebswellenritzel mit der Verzahnung des turmfesten Lagerrings im Eingriff stehen.

Während des Betriebs einer Windkraftanlage können insbesondere bei turbulenten Winden in Abhängigkeit vom Gierwinkel des Rotors sehr hohe Kräfte und damit sehr hohe Drehmomente auftreten, die sogenannten Giermomente. Diese hohen Giermomente können sowohl während einer Nachführbewegung der Maschinengondel als auch während des Stillstands der Maschinengondel auftreten, so daß die Maschinengondel gegen diese Momente drehsicher gehalten werden muss. Um zu verhindern, dass die Giermomente von den Azimutmotoren gehalten werden, ist in der Regel eine Drehhemmung oder eine Gierbremse vorgesehen. Anderenfalls wäre eine ausreichende Lebensdauer der Motoren oder der zwischengeschalteten Getriebe kaum zu gewährleisten. Kleine Anlagen begnügen sich meistens mit einer Drehhemmung in der Gondellagerung, für größere Anlagen sind in der Regel mehrere lösbare hydraulische Gierbremsen vorgesehen. Diese greifen üblicherweise an einem Bremsring an der Innenseite des Turms oder umgekehrt an einem Ring an der Maschinengondel an. Auch elektrische Gierbremsen sind bekannt. Auch während der Nachführbewegung sind üblicherweise eine oder zwei der Gierbremsen im Bremseingriff, um die erforderliche Dämpfung der Verstelldynamik zu gewährleisten. Die Azimutmotoren müssen daher so ausgelegt werden, dass sie diese Bremsmomente durch die Gierbremsen überwinden können (siehe z.B. Hau "*Windkraftanlagen ",* 4. Auflage, Seite 349/350, Abschnitt *Haltebremsen).*

Es ist auch bekannt, zusätzlich zu den Stillstandshaltebremsen separate Bremsen für die Nachführbewegung vorzusehen, gegen die die Azimutmotoren arbeiten müssen. Die Stillstandshaltebremsen sind nur aktiv beim Halten der Gondel während des Stillstands und werden für die Nachführbewegung freigegeben (siehe Gasch/Twele *"Windkraftanlagen",* 6. Auflage, Seiten 93/94, Abschnitt *3.3.1. Windrichtungsnachführung*). Es wird als nachteilig angesehen, dass neben den Stillstandshaltebremsen zusätzliche Nachführbremsen vorzusehen sind.

Es ist auch bekannt, die während des Stillstands mit einem bestimmten Stillstandshaltemoment arbeitenden Gierbremsen bei der Nachführung alle bei einem gleichen und konstanten niedrigeren Haltemoment zu betreiben. Diese bekannten Azimutbremssysteme neigen bei der Nachführbewegung zur Erzeugung von unerwünschten, zum Teil stark störenden Quietschgeräuschen.

Aus der DE 10 2008 004 948 A1 ist ein Bremssystem bekannt, bei dem das Haltemoment während der Nachführbewegung dynamisch geregelt wird. Es werden dazu verschiedene Alternativen vorgeschlagen:
- das Vor- bzw. Nachschalten eines regelbaren Hydraulikventils in der Hydraulikleitung zu der Bremse oder zu den Bremsen und anschließender Regelung des Ölflusses durch das Hydraulikventil;
- eine "digitale" Regelung durch Öffnen oder Schließen von zu den Bremsen parallel geschalteten Hydraulikventilen;
- die Einzelansteuerung der Bremsen durch vor- oder nachgeschaltete Hydraulikventile, wobei die Bremsen bei maximalem Bremsdruck betrieben werden, und gezielt Bremsen angepresst oder gelöst werden.

Schließlich sind im Stand der Technik folgende Modifikationen am Bremsbelag oder an der Bremsscheibe bekannt, um störende Geräusche zu vermindern: gezieltes Anrauen der Bremsscheibe; Verwendung unterschiedlicher Bremsbelagtypen; regelmäßige Reinigung von Bremsbelägen und Bremsscheibe, teilweise automatisiert; Variation der Bremsbelagträgerstärke; Einbringung von Bohr- oder Fräsmustern in die Bremsscheibe; Einbringen von Randfasen oder Nutsystemen in den Bremsbelag. Diese Modifikationen, soweit überhaupt reproduzierbar erfolgreich, haben teilweise einen verstärkten Bremsenverschleiß zur Folge, teilweise stellen sich nur kurzfristige Verbesserungen ein, die nach einigen Bremsvorgängen wieder verschwinden, teilweise ist unverhältnismäßig hoher Aufwand zu betreiben.

Die JP 2006 307653 A und die EP 1 650 431 A2 beschreiben generell Stillstandshaltebremssysteme.

Schließlich offenbart die nachveröffentlichte WO 2011/088850 A3 eine in besonderer Weise angesteuerte hydraulische Bremsvorrichtung für einen Azimuthantrieb einer Windkraftanlage.

Aufgabe der Erfindung ist es, ausgehend von dem erwähnten Stand der Technik eine verbesserte Vorrichtung für die Drehung der Maschinengondel einer Windenergieanlage zu schaffen, die während der Nachführbewegung ein konstantes Haltemoment erzeugt, und die das Auftreten störender Quietschgeräusche vermindert. Bevorzugt soll es möglich sein, bestehende Vorrichtungen ohne großen Aufwand in eine erfindungsgemäße Vorrichtung umzurüsten.

Gelöst wird die Aufgabe mit einer Vorrichtung für eine Windenergieanlage mit den Merkmalen des Anspruchs 1. Weitere vorteilhafte Ausgestaltungen der Erfindung sind in den Unteransprüchen angegeben.

Der in den Ansprüchen verwendete Begriff *Gierbremsen* soll dabei separate, ausschließlich während der Nachführbewegung verwendete Bremsen ebenso wenig umfassen, wie ausschließlich während des Stillstands verwendete Bremsen. Anspruchsgemäß geht es nur um diejenigen Bremsen, die zumindest zeitweise sowohl zum Haltemoment während der Nachführbewegung als auch zum Haltemoment während des Stillstands beitragen. Die Erfindung schließt aber nicht aus, dass es zusätzlich zu diesen anspruchsgemäßen Bremsen weitere Bremsen gibt.

Der Erfindung liegt die Erkenntnis zu Grunde, dass störende Geräusche des Azimutbremssystems bei der Nachführung vermeidbar sind, wenn die individuelle Bremskraft einer Gierbremse unterhalb eines bestimmten ersten Wertes bzw. oberhalb eines bestimmten zweiten Grenzwertes bleibt. In dem Zwischenbereich zwischen diesem ersten und zweiten Wert hingegen tritt der sogenannte SLIP-STICK-Effekt, der maßgeblich für die Geräuschentwicklung ist, verstärkt auf. Zwar sind die oben genannten ersten und zweiten Werte nicht scharf und allgemeingültig angebbar, weil sie zum einen anlagenabhängig sind, und zum anderen störende Geräusche nicht abrupt ab einem bestimmten Wert nicht mehr auftreten. Es hat sich aber gezeigt, dass zuverlässig eine Verbesserung eintritt, wenn z.B. die eine Hälfte der Gierbremsen während der Nachführbewegung bei erhöhter Bremskraft und die andere Hälfte bei erniedrigter Bremskraft betrieben wird. "Erhöht" und "erniedrigt" ist zu verstehen relativ zu der Bremskraft, die durchschnittlich von allen Gierbremsen aufzubringen wäre, wenn alle Bremsen gleichmäßig zur Aufbringung des Nachführhaltemomentes verwendet würden. Ein konkretes Beispiel mag dies verdeutlichen. Achtzehn hydraulische Azimutbremszangen sind radial verteilt um eine Bremsscheibe angeordnet, die zur Erzeugung des während der Nachführbewegung benötigten Haltemomentes jeweils mit fünfzehn bar Bremsdruck zu beaufschlagen sind. Die Geräuschentwicklung kann dadurch enorm verringert werden, dass acht dieser achtzehn Bremszangen mit einem Bremsdruck von vierunddreißig bar versorgt werden, also oberhalb eines im vorliegenden Beispiel über 15 bar und unterhalb 34 bar liegenden zweiten Grenzwertes, während zehn der Bremszangen ohne Bremsdruck bleiben, also unterhalb eines im vorliegenden Beispiel unter 15 bar liegenden ersten Grenzwertes. Das Gesamthaltemoment bleibt im Wesentlichen unverändert, der Geräuschpegel blieb über einen 2-monatigen Testzeitraum auf einem niedrigeren Niveau.

Die Möglichkeit, die vorhandenen Gierbremsen in mehr als zwei Gruppen einzuteilen, und z.B. eine erste Gruppe auf einem ersten, eine zweite Gruppe auf einem zweiten und eine dritte Gruppe auf einem dritten Druck- bzw. Bremsmomentniveau zu betreiben, ist vom Anspruch mit umfasst. In einem solchen Fall wären von der Gesamtzahl *z* der überhaupt vorhandenen Gierbremsen anspruchsgemäß *n* Bremsen auf die beiden im Anspruch 1 genannten Gruppen verteilt, während die übrigen *(z-n)* Gierbremsen auf andere Gruppen verteilt wären. Der Anspruch erfasst also auch die Einteilung der z Gierbremsen auf mehr als zwei Gruppen und auf die Einstellung von mehr als zwei Druck- und Bremsmomentniveaus.

Mit Vorteil werden gemäß Anspruch 2 die Gierbremsen dabei so angesteuert, dass in einem ersten Nachführbetrieb eine erste Teilmenge der Gierbremsen zur Erzeugung des Stillstandsbremsmomentes herangezogen werden, während in einem späteren Nachführbetrieb andere Bremsen das Nachführbremsmoment erzeugen, die beim ersten Nachführbetrieb auf dem niedrigeren Haltemoment *M4* gehalten waren. Es wird dadurch erreicht, dass nicht nur ein Teil der Gierbremsen im Nachführbetrieb beansprucht wird, sondern nach Möglichkeit alle Gierbremsen einer relativ gleichmäßigen Belastung ausgesetzt sind. Dies wird insbesondere dadurch erreicht, dass gemäß Anspruch 3 eine alternierende Ansteuerung gewählt wird, dass also die Gierbremsen abwechselnd im Nachführbetrieb zur Erzeugung des Stillstandshaltemomentes angesteuert werden, im nächsten Nachführbetrieb dann aber nur das geringere Haltemoment *M4* erzeugen.

Gemäß Anspruch 4 ist es bevorzugt, dass die Anzahl der Gierbremsen in zwei etwa gleich große Teilanzahlen aufgeteilt wird, von denen der erste Teil im ersten Nachführbetrieb zur Erzeugung des jeweiligen Haltemomentes *M3* angesteuert wird, während in einem späteren Nachführbetrieb die übrigen Gierbremsen zur Erzeugung des Haltemomentes *M3* angesteuert werden. Es sind zwar auch Aufteilungen dergestalt möglich, dass z. B. die Gesamtheit der Gierbremsen in drei oder vier Untergruppen aufgeteilt wird. Es ist von der Steuerlogik und der Schaltungstechnik allerdings einfacher, die Zahl der Gierbremsen in zwei etwa gleiche Teilgruppen aufzuteilen. Die Aufteilung in gleiche Teilanzahlen ist auch deshalb von Vorteil, weil sich zuverlässig und einfach ein konstantes Nachführbremsmoment bei jedem Nachführbetrieb erreichen lässt.

Gemäß Anspruch 5 ist es vorteilhaft, dass das Haltemoment *M4,* d. h. das niedrigere Haltemoment im Nachführbetrieb, ungefähr 0 beträgt. Dies bedeutet, dass die entsprechenden Gierbremsen im Nachführbetrieb im Wesentlichen kein Bremsmoment zum Nachführbremsmoment beitragen. Bei hydraulischen Bremsen kann dies z. B. dadurch erreicht werden, dass bezüglich dieser Gierbremsen der Rückfluss der Hydraulikflüssigkeit zum Tank weitestgehend widerstandslos erfolgen kann. Es ist aber auch möglich, dass dieser Rückfluss gegen einen geringen Druck zu erfolgen hat. Wenn z. B. der Bremsdruck derjenigen Gierbremsen, die das Nachführbremsmoment M3 erzeugen, bei 35 bar liegt, so wird ein Druck von unter 5 bar als gering im Sinne dieses Anspruches 5 angesehen.

Mit Vorteil werden die m zur Erzeugung des Nachführbremsmomentes angesteuerten Bremsen dabei symmetrisch um die Drehachse der Maschinengondel angeordnet, um eine möglichst gleichmäßige Momentenverteilung zu erreichen. Weiterhin ist es vorteilhaft, dass auch die übrigen *(n-m)* Gierbremsen in gleicher Weise symmetrisch um diese Achse angeordnet sind. Besonders vorteilhaft wäre eine punktsymmetrische Anordnung, eine spiegelsymmetrische Anordnung bietet jedoch gegenüber z. B. einer einseitigen Anordnung der Gierbremsen auch bereits deutliche Vorzüge.

Die Gierbremsen nach den bisherigen Ansprüchen könnten beliebig ausgebildet sein. Neben hydraulisch arbeitenden Bremsen kommen also z. B. auch elektrische Bremsen in Frage. Es ist auch denkbar, dass die Bremsen in den Stellantrieben integriert sind, wie dies z. B. bei elektrischen Stellantrieben mit integrierter Bremsfunktion bekannt ist. Die grundsätzliche Lehre der Ansprüche 1 bis 6 lässt sich auf alle diese Bremsen anwenden.

Bei hydraulischen Bremsen mit hydraulischer Versorgung und hydraulischer Ansteuerung ist es gemäß Anspruch 7 vorteilhaft, dass die Steuereinrichtung in bestimmter Weise die in dem Hydraulikversorgungskreis angeordneten Stellglieder steuert, nämlich derart, dass im Stillstandsbetrieb alle Gierbremsen mit einem Betriebsdruck *P1* versorgt sind, der zu der Erzeugung des Gesamtstillstandshaltemomentes *M1* führt. Für den Nachführbetrieb werden die Stellglieder von der Steuereinrichtung angesteuert, um diesen Stillstandsbetrieb aufzuheben und um m Gierbremsen mit einem gegenüber dem Stillstandsbetriebsdruck geringeren Nachführbetriebsdruck *P3* und die übrigen *(n-m)* Gierbremsen mit einem noch weiter erniedrigten Betriebsdruck *P4* zu versorgen. Hierbei umfasst der Begriff *Stellglieder* unter anderem Wegeventile, Stromventile bzw. Sperrventile und Druckventile, die an geeigneten Stellen, auch miteinander kombiniert und verschaltet, im Hydraulikversorgungskreis angeordnet sind, um die anspruchsgemäß verlangten Druckbedingungen einzustellen.

Die Anordnung der Stellglieder und die Verrohrung des Hydraulikversorgungskreises kann auf vielfältige Art erfolgen. Es ist z. B. grundsätzlich denkbar, dass jede Hydraulikbremse in einem separaten Hydraulikversorgungskreis druckversorgt ist. Über entsprechend zu- bzw. abschaltbar angeordnete Druckreduzieroder Druckbegrenzungsventile könnte beispielsweise zwischen dem Stillstandsbetriebsdruck P1 und dem Nachführbetriebsdruck *P3* hin und her geschaltet werden. Der reduzierte Nachführbetriebsdruck *P4* könnte weiterhin z. B. dadurch eingestellt werden, dass die Gierbremsen von der Druckversorgung abgeschnitten werden und somit druck- und bremsmomentlos arbeiten.

Gemäß Anspruch 8 ist es allerdings vorteilhaft, dass die Gierbremsen in zwei getrennten stellgliedbeherrschten Hydraulikkreisen angeordnet sind. In einem ersten Hydraulikkreis sind die *m* Gierbremsen seriell angeordnet, die im Nachführbetrieb das Haltemoment *M3* ausüben, während im zweiten separaten Hydraulikkreis die *(n-m)* Gierbremsen seriell angeordnet sind, die das geringere Nachführmoment *M4* erzeugen. Diese Verrohrungsvariante hat den Vorzug, dass eine einfache Steuerlogik verwendet und eine einfache Steuerung erfolgen kann.

Alternativ zu der vorgenannten Anordnung der Gierbremsen ist gemäß Anspruch 9 vorteilhaft, die n Gierbremsen seriell in einer doppelten Ringleitung anzuordnen, wobei jede Ringleitung stellgliedbeherrscht ist. Dies hat den Vorzug, dass keinerlei Änderungen am Hydraulikaggregat vorzunehmen sind, wobei unter Hydraulikaggregat eine Hydraulikpumpe und/oder ein Druckspeicher zu verstehen sind. Die Umsetzung dieser doppelten Ringanordnung kann z. B. über die logische Verschaltung von zwei Magnetventilen erfolgen, wobei gegenüber der Steuerung im Stand der Technik weiterhin softwareseitig eine logische Ventilsteuerung zu implementieren ist.

Die vorteilhaften Merkmale des Anspruchs 10 führen zu einer einfachen Nachrüstbarkeit, weil nur die zusätzlichen ungesteuerten Stellglieder eingebaut werden müssen. Eine zusätzliche Anbindung dieser Stellglieder an die Steuerung und deren funktionelle Erweiterung wären nicht erforderlich.

Im Stand der Technik sind die zur Erzeugung des Stillstandshaltemomentes angesteuerten Gierbremsen in der Regel seriell in einem Hydraulikkreis angeordnet. Hier ist es gemäß Anspruch 11 im Sinne einer einfachen Nachrüstbarkeit vorteilhaft, dass zwischen der *m-ten* und der (*m*+*1*)*ten* Gierbremse ein Stellglied bestehend aus einem Druckbegrenzungsventil und einem parallel dazu geschalteten Rückschlagventil angeordnet ist. Die Anordnung erfolgt dabei derart, dass die Sperrrichtung des Rückschlagventils der Öffnungsrichtung des Begrenzungsventils entspricht. Der Hydraulikkreis ist weiterhin derart mit Stellgliedern und Leitungen ausgebildet, dass bei entsprechender Steuerung der Stellglieder durch die Steuereinrichtung im Stillstandsbetrieb der Stillstandsbetriebsdruck P1 an allen *n* Gierbremsen anliegt, indem das Druckbegrenzungsventil umgangen und die Strömungsrichtung im Hydraulikkreis der Durchlassrichtung des Rückschlagventils entspricht. Im Nachführbetrieb steuert die Steuereinrichtung die erforderlichen Stellglieder derart an, dass an den *m* Gierbremsen bis zum Druckbegrenzungsventil zur Erzeugung des Nachführbremsmomentes der erforderliche Betriebsdruck *P3* anliegt und die Strömungsrichtung im Hydraulikkreis der Sperrrichtung des Rückschlagventils entspricht. Die Höhe der Bremsdrücke *P3* und *P4* wird dabei derart eingestellt, dass *m*M3* + *(n-m)*M4* ungefähr *M1* entspricht. Zur Verwirklichung dieser Merkmale ist lediglich ein geringer Montageaufwand notwendig, indem die Hydraulikverrohrung zu modifizieren ist und gegebenenfalls zusätzliche Stellglieder einzubauen sind, namentlich die Kombination aus Druckbegrenzungsventil mit parallel geschaltetem Rückschlagventil ist einzubauen. Es muss hingegen kein Eingriff in das Hydraulikaggregat vorgenommen werden. Je nach Ausgangshydraulikkreis ist ein geringer oder kein Eingriff in die Steuerung notwendig.

Mit Vorteil ist dabei gemäß Anspruch 12 zusätzlich zum Hydraulikaggregat, das die Druckversorgung im Stillstandsbetrieb übernimmt, ein Druckspeicher vorgesehen, der die Druckversorgung im Nachführbetrieb übernimmt. Der Druckspeicher ist dazu derart im Hydraulikkreis angeordnet, dass sein Druckeinspeisepunkt in der Strömungsrichtung des Nachführbetriebs vor dem Druckbegrenzungsventil liegt. Bis zum Druckbegrenzungsventil liegt also ein bestimmter, durch das Begrenzungsventil vorgegebener Druck an den *m* Gierbremsen an, während hinter dem Druckbegrenzungsventil ein anderer Druck anliegt, z. B. der Druck für den Rückfluss der Hydraulikflüssigkeit in den Tank. Wenn an den eingesetzten Stellgliedern keine Leckagen auftreten, wird eigentlich kein Druckspeicher benötigt, da der Druck auch ohne Druckspeicher zuverlässig im System gehalten werden kann. Allerdings ist ein über längere Zeiträume konstanter Druck besser mit einem Druckspeicher erreichbar.

Nachfolgend soll die Erfindung anhand von schematisiert und vereinfacht dargestellten Ausführungsbeispielen näher erläutert werden. Es zeigen:
- Fig. 1: eine Windenergieanlage in Seitenansicht;
- Fig. 2: einen Schnitt entlang der Linie X-X dargestellt in Fig. 1
- Fig. 3: einen Lagerkranz mit daran angreifenden Azimutmotoren;
- Fig. 4: eine Prinzipdarstellung der Ansteuerung von einzeln ansteuerbaren und regelbaren Gierbremsen durch eine Steuereinrichtung;
- Fig. 5: eine Prinzipdarstellung zur hydraulischen Steuerung parallel geschalteter Gierbremsen;
- Fig. 6a,b: eine Prinzipdarstellung zur hydraulischen Steuerung seriell angeordneter Gierbremsen gemäß dem Stand der Technik (a) und gemäß der Erfindung (b);
- Fig. 7a,b,c,d: mehrere Prinzipdarstellungen unterschiedlicher Ausführungsbeispiele zur hydraulischen Ansteuerung von seriell und/oder parallel angeordneten Gierbremsen;
- Fig. 8 a, b: mehrere Prinzipdarstellungen zu logischen Stellgliedanordnungen.

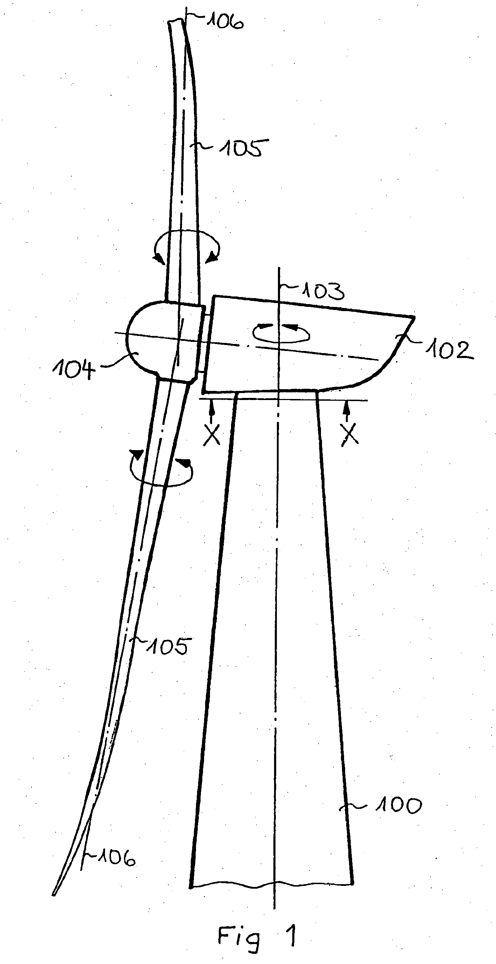

Die Fig. 1 zeigt eine Windenergieanlage mit einem Turmabschnitt 100, auf dem eine Maschinengondel 102 drehbar gelagert angeordnet ist. Die Maschinengondel 102 ist um die Längsachse 103 des Turmes drehbar, um einen an ihr drehgelagert angeordneten Rotor 104, 105 bei wechselnder Windrichtung dem Wind nachführen zu können. Der Rotor besteht aus einer Rotornabe 104, an der mehrere Rotorblätter 105 angeordnet sind, die in der Regel jeweils um ihre Längsachsen 106 drehbar ausgebildet sind.

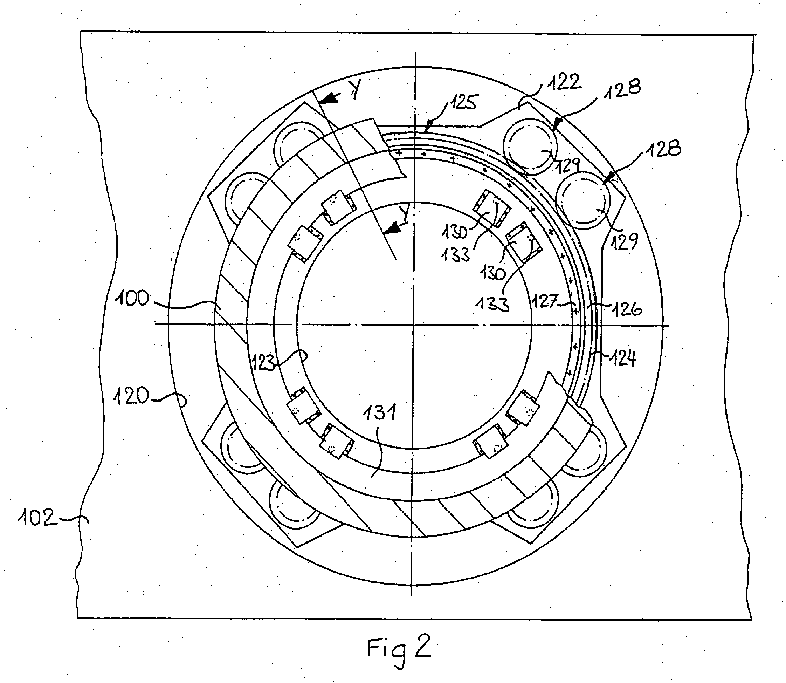

In der Fig. 2 ist ein Schnitt durch den Turm 100 entlang der in der Fig. 1 gezeigten Linie X-X dargestellt. Fig. 2 zeigt also die Maschinengondel 102 in einer Ansicht von unten, wobei der vordere und der hintere Bereich der Gondel zur Vereinfachung nicht dargestellt sind. Die Gondel 102 weist für die Verbindung mit dem Turm 100 eine Gondelöffnung 120 auf. Aus Darstellungsgründen ist der geschnittene Turm 100 im oberen rechten Quadranten partiell weg gebrochen, um die Drehverbindung zwischen dem Turm und der Gondel besser erkennen zu können. Die Drehverbindung der Gondel 102 mit dem Turm 100 erfolgt über ein Azimutlager 125. Das Azimutlager besteht aus einem Außenring 126 und einem Innenring 127. Der Außenring 126 ist an dem Turm 100 befestigt und weist eine Außenverzahnung 124 auf, die in der Fig. 2 mittels einer Strich-Punktlinie dargestellt ist. Der Innenring 127 ist mit einem in der Gondel 102 angeordneten Maschinenträger 122 und darüber mit der Gondel verbunden. Um einen Zugang von dem Turm auf den Maschinenträger 122 zu ermöglichen, ist in dem Maschinenträger eine Zugangsöffnung 123 vorgesehen.

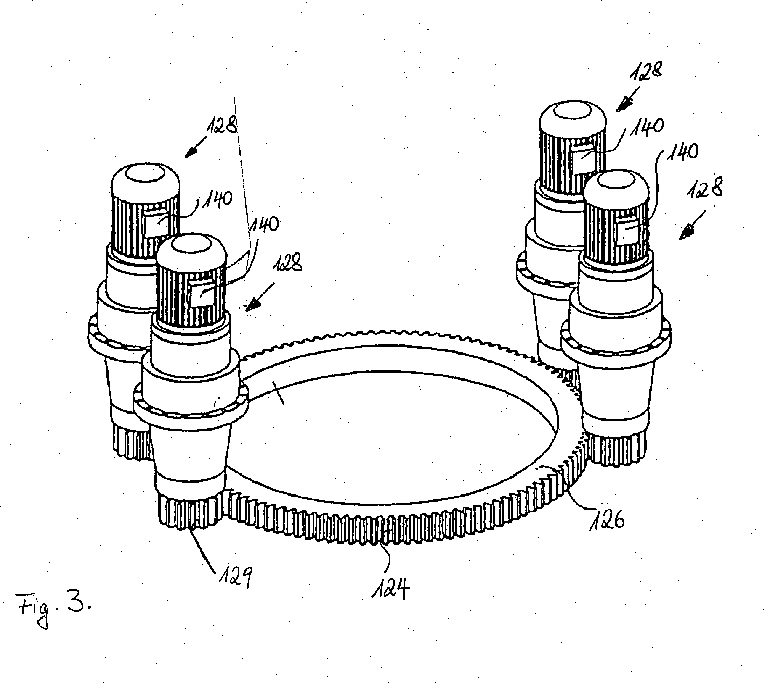

Die Fig. 2 zeigt ein Ausführungsbeispiel für die Ausbildung einer Drehvorrichtung für die Gondel 102. Für die aktive Drehung der Gondel relativ zum Turm werden motorische Antriebe benötigt. Zu diesem Zweck sind acht Stellantriebe 128 vorgesehen, wobei jeweils zwei Stellantriebe 128 als Paar angeordnet und zu den anderen Stellantriebspaaren um jeweils 90° versetzt sind. Die Stellantriebe 128 werden vom Maschinenträger 122 gehalten. Weiterhin weist jeder Stellantrieb 128 ein Zahnritzel 129 auf, das in Eingriff mit der Außenverzahnung des Außenrings 126 des Azimutlagers 125 ist. Figur 3 zeigt dieses Zusammenspiel zwischen den Zahnritzeln 129 der Stellantriebe 128 und der Außenverzahnung 124 des Außenrings 126.

Die Ausrichtung der Gondel 102 erfolgt über eine Betätigung der Steuerung 140 der Stellantriebe 128 mittels einer nicht dargestellten Steuerungseinrichtung. Zum Halten einer über die Steuerungseinrichtung eingestellten Ausrichtung der Gondel 102 sind in dem dargestellten Ausführungsbeispiel der Fig. 2 acht Bremseinrichtungen 130 vorgesehen. Jeweils eine Bremseinrichtung 130 ist im Bereich eines Stellantriebes 128 angeordnet, wobei die Bremseinrichtungen 130 jeweils fest mit dem Maschinenträger 122 verbunden sind. Jede der schematisch dargestellten Bremseinrichtungen 130 weist zwei Bremsbacken auf, die in dieser Darstellung nicht sichtbar sind und die bei einer Betätigung der Bremseinrichtung eine Reibschlußverbindung mit einer Bremsscheibe 131 eingehen, die zwischen die beiden Bremsbacken ragt. Die Bremsscheibe 131 ist fest zwischen dem Turm 100 und dem Außenring 126 des Azimutlagers 125 angeordnet. Solche Bremseinrichtungen 130 sind beispielsweise in Gasch/Twele *"Windkraftanlagen",* 6. Auflage, Kapitel 3.3, z.B. Bilder 3-46 und 3-47 sowie Hau "*Windkraftanlagen",* 4. Auflage, Kapitel 8.13, z.B. Bilder 8.60 und 8.64 gezeigt.

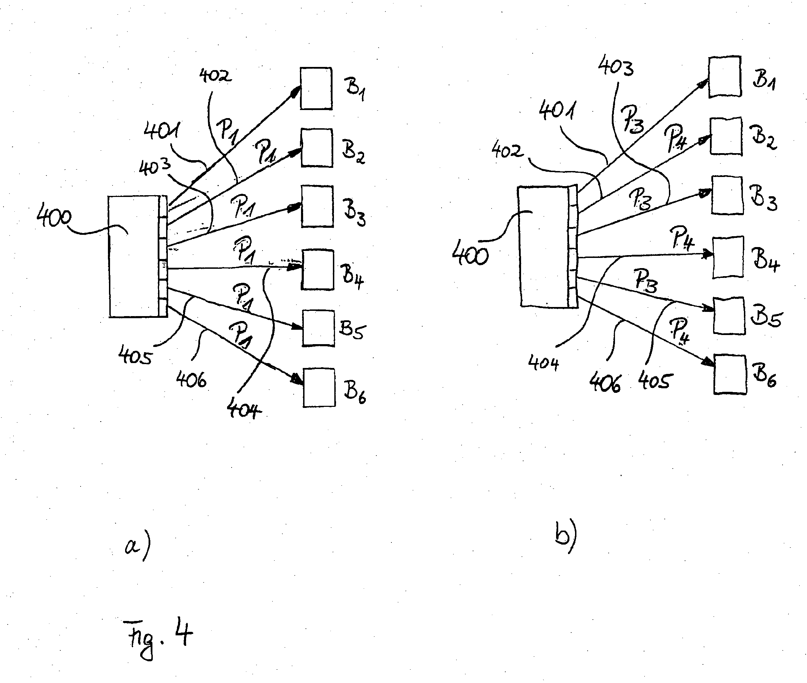

In den Figuren 4a) und 4b) ist für den Fall einer Einzelansteuerung der Gierbremsen B1 bis B6 die Ansteuersituation einmal für den Stillstandsbetrieb (a) und einmal für den Nachführbetrieb (b) dargestellt. Im Stillstandsbetrieb setzt die Steuereinrichtung 400 Steuersignale 401 bis 406 an jede der Gierbremsen B1 bis B6 ab. Für den Fall, dass B1 bis B6 hydraulische Bremsen sind, können diese Steuersignale z. B. jeweils ein Stillstandsbetriebsdruck *P1* sein, der zur Erzeugung des Gesamtstillstandshaltemomentes *M1* erforderlich ist. Im Falle von Elektrobremsen mit Spindelantrieben kann das Steuersignal 401 z. B. eine Information sein über die Anzahl der Spindelumdrehungen.

Demgegenüber setzt die Steuereinrichtung in dem in Abbildung b) dargestellten Nachführbetrieb an eine erste Gruppe von Gierbremsen, bestehend aus den Bremsen B1, B3, B5, Steuerbefehle 401, 403, 405 ab, die die genannten Gierbremsen jeweils auf ein Nachführbremsmoment *M3* steuern. Bei hydraulischen Bremsen kann z. B. an die Bremsen B1, B3 und B5 ein Nachführbetriebsdruck P3 angelegt werden. Im Unterschied dazu werden die Gierbremsen B2, B4 und B6 von der Steuereinrichtung 400 mit Steuersignalen 402, 404, 406 derart angesteuert, dass die genannten Bremsen jeweils ein Nachführbremsmoment *M4* erzeugen. Im Falle von hydraulisch arbeitenden Gierbremsen kann die Steuereinrichtung z. B. einen Betriebsdruck P4 an die Bremsen B2, B4 und B6 anlegen zur Erzeugung des jeweiligen Bremsmomentes *M4.*

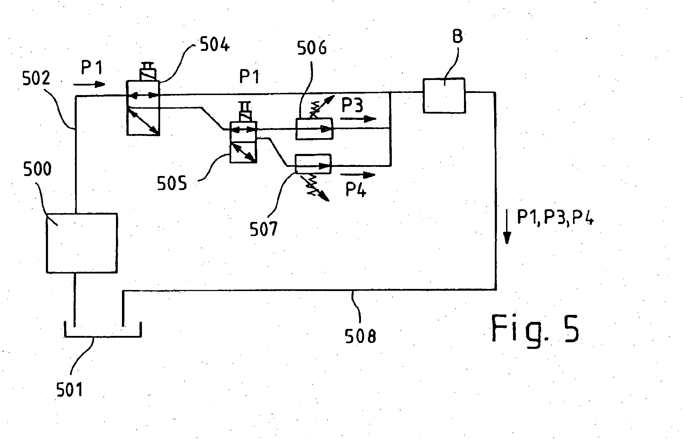

Fig. 5 zeigt in prinzipienhafter Darstellung einen Hydraulikversorgungskreis für eine Azimutbremse B. Bezogen auf Fig. 4b) könnte jede der dort gezeigten Azimutbremsen B1 bis B6 in einem solchen Hydraulikkreis angeordnet sein. Fig. 5 zeigt also die Anordnung einer jeden Azimutbremse in einem getrennten Hydraulikkreis.

Das Hydraulikaggregat 500 pumpt Hydraulikflüssigkeit aus einem Tank 501 und beaufschlagt die Hydraulikleitung 502 mit einem Hydraulikdruck *P1.* Ein schaltbares Zweiwegeventil 504 lässt in der dargestellten ersten Schaltstellung den Druck *P1* passieren, so dass an der nachgeschalteten Gierbremse B ein Betriebsdruck *P1* anliegt zur Erzeugung des Stillstandshaltemomentes *M1,* bzw. eines Teiles des Stillstandshaltemomentes *M1,* das in der Regel gemeinsam von mehreren Gierbremsen aufgebracht wird.

In der zweiten Schaltstellung des Zweiwegeventiles 504 liegt der Betriebsdruck *P1* an einem zweiten Zweiwegeventil 505 an. In der ersten dargestellten Schaltstellung dieses Zweiwegeventiles wird der Betriebsdruck *P1* durchgeleitet zu einem Druckreduzierventil 506, so dass hinter dem Druckreduzierventil ein Betriebsdruck P3 gegeben ist. In der dargestellten Schaltstellung des Zweiwegeventiles 505 würde die Gierbremse B bei der zweiten Schaltstellung des Zweiwegeventiles 504 mit dem Betriebsdruck *P3* beaufschlagt zur Erzeugung des Nachführhaltemomentes *M3.* Zur Erzeugung des Nachführhaltemomentes *M4* muss das Zweiwegeventil 504 in die zweite Schaltstellung gebracht werden und gleichzeitig auch das Zweiwegeventil 505 in die zweite Schaltstellung gebracht werden. Bei diesen Schaltstellungen liegt der Betriebsdruck *P1* am Druckreduzierventil 507 an, hinter dem dann ein Betriebsdruck *P4* wirksam ist.

Es versteht sich, dass zur Umsetzung dieser grundsätzlichen Steuerungsstruktur weitere nicht dargestellte Stellglieder erforderlich sind, z. B. im zum Tank zurückführenden Leitungsbereich 508, um an der Gierbremse B den jeweiligen Betriebsdruck *P1, P3* bzw. *P4* aufbauen zu können.

Die in Fig. 5 dargestellte Verrohrung und logische Schaltung dürfte für die praktische Umsetzung sehr aufwändig sein. Die in den nachfolgen Figuren dargestellten Ausführungsbeispiele zeichnen sich demgegenüber durch eine einfachere Verrohrung und Steuerlogik aus.

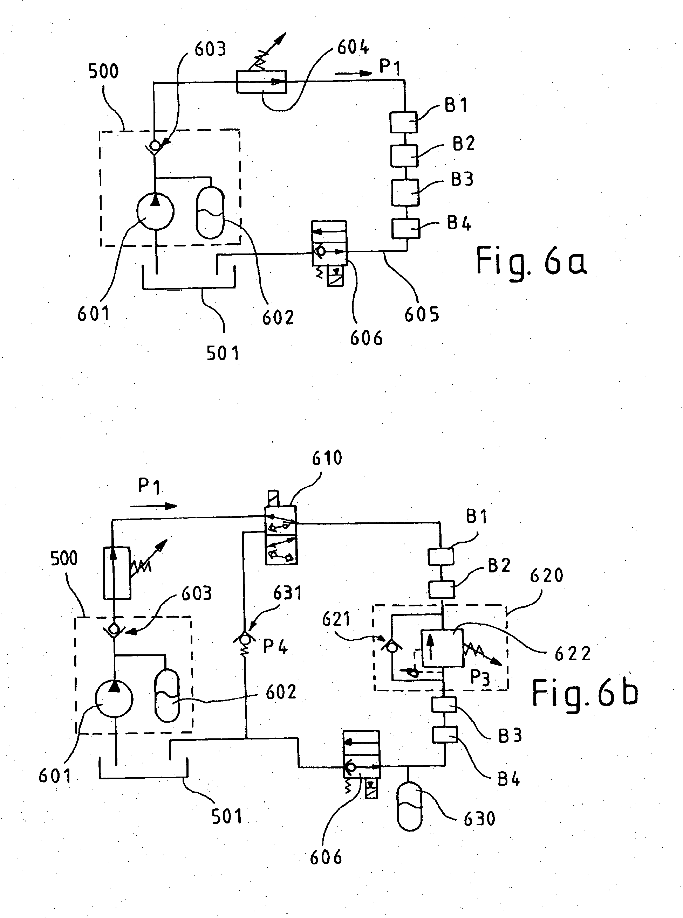

Fig. 6a) zeigt eine übliche, vereinfacht dargestellte Hydraulikversorgungsanordnung gemäß dem Stand der Technik. Das Hydraulikaggregat 500 besteht im gezeigten Beispiel aus einer Pumpe 601, einem Druckspeicher 602 sowie einem Rückschlagventil 603. Ein nachfolgend angeordnetes Druckreduzierventil 604 regelt den Ausgangsdruck auf einen gewünschten Betriebsdruck *P1.* Die seriell angeordneten Gierbremsen B1 bis B4 erfahren alle den gleichen Betriebsdruck *P1* und erzeugen zusammen das Stillstandshaltemoment *M1,* wobei jede Bremse im Wesentlichen den gleichen Beitrag ¼1*M1* liefert. In der sich der Gierbremse B4 anschließenden Rückfiihrleitung ist ein schaltbares Stellglied 606 angeordnet. In der dargestellten Schaltstellung dieses Stellgliedes 606 ist der Rückfluss der Hydraulikflüssigkeit in den Tank 501 unterbunden, während in der zweiten Schaltstellung der Rückfluss zur Erreichung eines Pumpens im Kreis geöffnet ist. Dies kann gegebenenfalls gegen einen geringen Druck erfolgen. In der dargestellten Schaltstellung des Stellgliedes 606 liegt an den Azimutbremsen B1 bis B4 der Betriebsdruck *P1* an, während in der zweiten Schaltstellung entweder kein Betriebsdruck anliegt, oder der Druck, gegen den der Rückfluss in den Tank erfolgt.

Fig. 6b) enthält gegenüber der Konstruktion der Fig. 6a), die dem Stand der Technik entspricht, die nachfolgenden Modifikationen. Vor den seriell angeordneten Gierbremsen B1 bis B4 ist ein Zweiwegeventil 610 angeordnet, das in einen ersten und in einen zweiten Schaltzustand von der nicht dargestellten Steuereinrichtung schaltbar ist. In der dargestellten ersten Schaltstellung wird der Betriebsdruck *P1* ungehindert durchgeleitet und die Gierbremsen B1 bis B4 werden somit mit dem Betriebsdruck *P1* beaufschlagt. Zwischen den Gierbremsen B2 und B3 ist ein Stellglied 620 angeordnet, das aus einem Rückschlagventil 621 und einem parallel dazu geschalteten Druckbegrenzungsventil 622 besteht. Das Druckbegrenzungsventil öffnet bei einem Druck *P3.*

In der gezeigten Schaltstellung des Stellgliedes 610 liegt an den Gierbremsen B1 und B2 der Betriebsdruck *P1* an. Das Rückschlagventil 621 wird in Durchlassrichtung angeströmt und öffnet, so dass der Betriebsdruck *P1* auch an den Gierbremsen B3 und B4 anliegt. Das Druckbegrenzungsventil 622 hingegen wird entgegen seiner Durchlassrichtung angeströmt, und wird durch das Rückschlagventil 621 umgangen.

Für den Nachführbetrieb wird das Stellglied 610 in die zweite Schaltstellung von der nicht dargestellten Steuereinrichtung gesteuert. Das Hydraulikaggregat 500 ist somit vom die Gierbremsen B1 bis B4 versorgenden Leitungssystem abgekoppelt. Ein zusätzlicher Druckspeicher 630, der optional vorgesehenen ist, um eventuelle Leckagen und Druckverlust zu kompensieren, stellt nunmehr den benötigten Betriebsdruck zur Verfügung. In der dargestellten Schaltstellung des Stellgliedes 606 kann vom Druckspeicher 630 aus gesehen die Hydraulikflüssigkeit nicht direkt in Richtung Tank fließen, sondern muss in Richtung Gierbremse B4 strömen. Gegenüber der vorher beschriebenen Situation hat sich also die Strömungsrichtung geändert. Die Strömungsrichtung führt jetzt also in Sperrrichtung des Rückschlagventiles 621, während das Druckbegrenzungsventil 622 in Durchflussrichtung beaufschlagt wird. Dieses Druckbegrenzungsventil ist ausgebildet, bei einem Druck von *P3* zu öffnen, so dass an den in Strömungsrichtung vorher angeordneten Gierbremsen B4 und B3 ein Betriebsdruck *P3* anliegt, soweit der Druckspeicher 630 ausreichend ausgebildet ist, diesen Druck zur Verfügung zu stellen. Nach Durchströmen des Druckbegrenzungsventiles 622 werden die Gierbremsen B2 und B1 durchströmt. Die Hydraulikflüssigkeit durchströmt sodann das in die zweite Schaltstellung angesteuerte Stellglied 610 und fließt dann nach Überwindung des federbelasteten Rückschlagventiles 631 zurück in den Tank 501. Das federbelastete Rückschlagventil 631 öffnet bei einem Druck *P4,* so dass an den Gierbremsen B2 und B1 ein Betriebsdruck *P4* anliegt zur Erzeugung eines Nachführhaltemomentes *M4.* Die Gierbremsen B4 und B3 erzeugen jeweils ein Nachführhaltemoment *M3.*

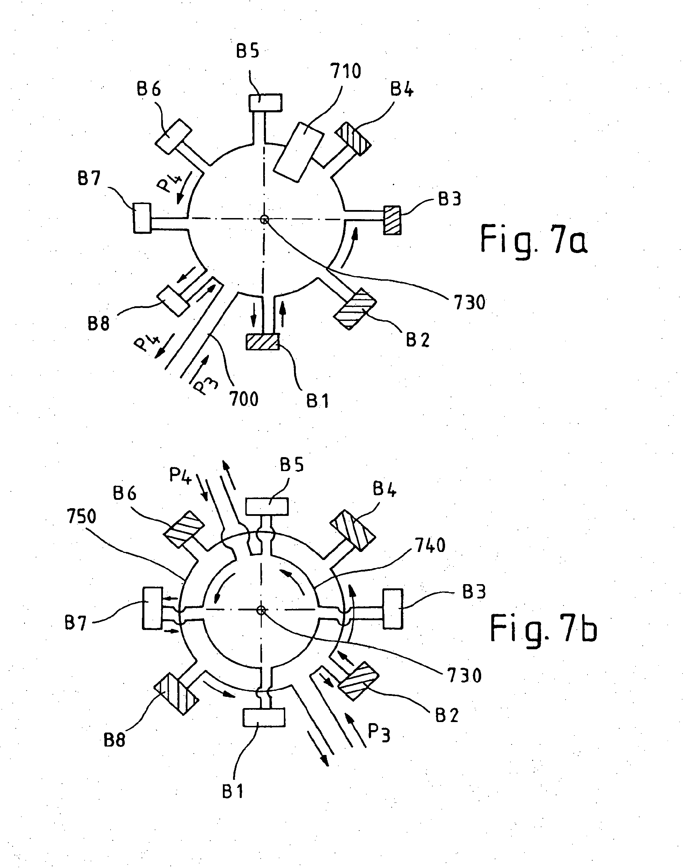

In den Figuren 7a) bis 7d) sind in vereinfachter prinzipienhafter Darstellung weitere Hydraulikkonfigurationen zur Umsetzung der Erfindung dargestellt. Fig. 7a) zeigt die serielle Anordnung der Gierbremsen B1 bis B8 in einer Ringleitung 700, die von einem nicht dargestellten Hydraulikaggregat mit Betriebsdruck versorgt wird. Dargestellt ist der Nachführbetrieb, so dass der angelegte Betriebsdruck dem Druck P3 entspricht. Zwischen den Gierbremsen B4 und B5 ist ein Stellglied 710 angeordnet. Die in Strömungsrichtung vor diesem Stellglied 710 angeordneten Gierbremsen B1 bis B4 werden alle mit dem Betriebsdruck P3 beaufschlagt und erzeugen jeweils ein Nachführhaltemoment *M3.* Bei dem Stellglied 710 handelt es sich unter anderem um ein Druckreduzierventil, das den Betriebsdruck vom Druck *P3* auf einen Betriebsdruck *P4* reduziert. Die dem Stellglied 710 in Strömungsrichtung nachgeschaltet angeordneten Gierbremsen B5 bis B8 sind daher mit einem Betriebsdruck *P4* beaufschlagt und erzeugen somit jeweils ein Nachführhaltemoment *M4.* Nicht dargestellt ist, dass hinter der Gierbremse B8 noch ein zusätzliches Stellglied (z.B. 2/2-Wegeventil) nachgeschaltet ist, damit an allen Bremsen der Druck *P1* anliegen kann. Zusätzlich sollte eine Entlüftung der Druckleitung zwischen dem Stellglied 710 und dem Stellglied hinter der Gierbremse B8 sichergestellt sein. Schließlich ist darauf hinzuweisen, dass das Stellglied 710 im Stillstandsbetrieb den Stillstandsbetriebsdruck *P1* passieren lassen muss, z.B. weil das Stellglied 710 ein schaltbares 2/2-Wegeventil umfasst. Die hier gezeigten Darstellungen sind ohnehin nur als Verdeutlichung des erfindungsgemäßen Prinzips zu verstehen. Dem mit der Umsetzung dieser prinzipiellen Lehre befassten Fachmann ist klar, dass ggf. weitere aus dem Stand der Technik bekannte Leitungen, Ventile oder Stellglieder vorzusehen sind.

Fig. 7b) zeigt eine zu Fig. 7a) alternative Konfiguration. Die Gierbremsen B1 bis B8 sind in diesem Ausführungsbeispiel in zwei getrennten Hydraulikkreisen angeordnet. Jeweils punktsymmetrisch zur Drehachse 730 sind die Gierbremsen B1, B3, B5 und B7 seriell im ersten Hydraulikkreislauf 740 verrohrt, während die ebenfalls punktsymmetrisch um die Drehachse 730 angeordneten Gierbremsen B2, B4, B6 und B8 im zweiten Hydraulikkreis 750 verrohrt sind. Beide Hydraulikkreise werden mit einem Betriebsdruck *P3* bzw. *P4* beaufschlagt. Da im gezeigten Beispiel der Hydraulikkreis 750 mit einem Nachführbetriebsdruck *P3* beaufschlagt wird, erzeugen die Gierbremsen B2, B4, B6 und B8 jeweils ein Nachführhaltemoment *M3,* während die übrigen Gierbremsen B1, B3, B5 und B7 aufgrund der Beaufschlagung mit einem Betriebsdruck *P4* jeweils ein Nachführhaltemoment *M4* erzeugen.

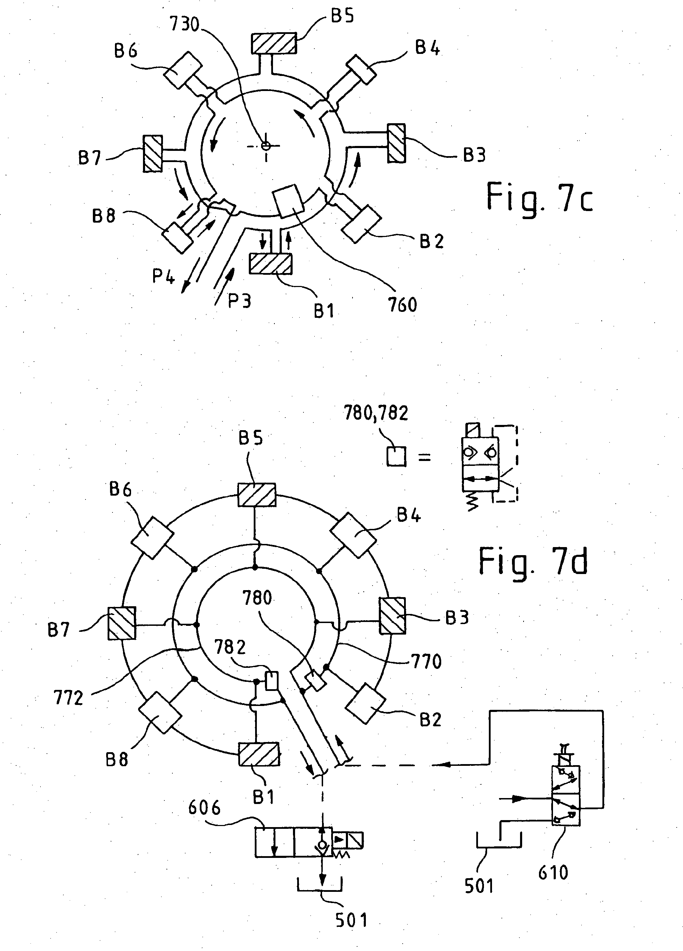

Fig. 7c) zeigt eine serielle Anordnung der Gierbremsen B1 bis B8, wobei in diesem Beispiel ein zweifach umlaufender Ring vorgesehen ist und die Gierbremsen in der Reihenfolge B1, B3, B5, B7, B2, B4, B6, B8 in diesem Doppelkreis verschaltet sind. Zwischen Gierbremse B7 und Gierbremse B2 ist ein Stellglied 760 angeordnet. Der Hydraulikkreis wird eingangsseitig mit einem Betriebsdruck P3 beaufschlagt. Bei dem Stellglied 760 handelt es sich um ein Druckbegrenzungsventil, das bei einem Betriebsdruck von P3 öffnet. Der Druck hinter diesem Druckbegrenzungsventil wird bestimmt durch denjenigen Druck, mit dem die Hydraulikflüssigkeit zurück in den Tank strömt, z. B. durch ein federbelastetes Rückschlagventil, das bei einem Betriebsdruck P4 öffnet. An den Gierbremsen B1, B3, B5 und B7 liegt daher der Betriebsdruck *P3* an, weil diese in Strömungsrichtung vor dem Druckbegrenzungsventil 760 angeordnet sind, während an den Gierbremsen B2, B4, B6 und B8 der niedrigere Betriebsdruck P4 anliegt. Wie auch schon im Ausführungsbeispiel der Fig. 7b), sind die Gierbremsen B1, B3, B5 und B7 sowie die Gierbremsen B2, B4, B6 und B8 symmetrisch um die Drehachse 730 angeordnet. Das zu Fig. 7a) in Bezug auf ein hinter Gierbremse B8 anzuordnendes Stellglied zur Erzeugung des Stillstandshaltemomentes gilt hier analog, wie auch die Aussage zur Entlüftung und zum Stellglied 710 im Stillstandsbetrieb.

Fig. 7d) zeigt ein weiteres Ausführungsbeispiel der Erfindung, in dem zulaufseitig ein wie auf Fig. 6b) bekanntes Stellglied 610 und ablaufseitig ein wie ebenfalls aus Fig. 6b) bekanntes Stellglied 606 angeordnet ist. Eine erste Versorgungsringleitung 770 ist einlaufseitig von einem Stellglied 780 beherrscht, eine zweite Versorgungsleitung 772 ist auslaufseitig von einem Stellglied 782 beherrscht. Die Stellglieder 780 und 782 sind baugleiche Magnetventile, die bei Bestromung schließen und ohne Bestromung geöffnet sind. Die Gierbremsen B2, B4, B6 und B8 sind an der ersten Versorgungsleitung 770, die Gierbremsen B1, B3, B5 und B7 sind an der zweiten Versorgungsleitung 772 angeschlossen. Je nach Schaltzustand der verschiedenen Stellglieder lassen sich die nachfolgenden Funktionen realisieren.

Zum Spülen des Hydraulikkreises wird das Zweiwegeventil 610 in den ersten, nämlich in den geöffneten Zustand gebracht. Auch die Magnetventile 780 und 782 bleiben unbestromt und somit offen. Schließlich muss auch noch das Spülventil 606 geöffnet werden, wobei dazu in der dargestellten Konfiguration eine Bestromung notwendig ist, um das Ventil in die geöffnete Schaltstellung zu bringen. Die Hydraulikflüssigkeit kann nun drucklos im Kreis gepumpt werden.

Zum Entdrillen sind alle Gierbremsen drucklos zu schalten. Es wird dazu das Zweiwegeventil 610 bestromt, so dass es in den geschlossenen Zustand über geht. Wie auch schon beim Spülen werden die Magnetventile 780 und 782 nicht bestromt und bleiben im offenen Schaltzustand. Auch das Spülventil 606 ist in den offenen Schaltzustand zu bringen und wird daher bestromt. Im Azimutkreis herrscht deshalb kein Betriebsdruck, so dass alle Gierbremsen kein Haltemoment ausüben.

Für den Stillstandsbetrieb soll an allen Gierbremsen ein Druck von 160 bar anliegen. Dazu wird das Zweiwegeventil 610 in die geöffnete Schaltstellung gebracht durch Nichtbestromung. Der von einem Hydraulikaggregat gelieferte Betriebsdruck *P1* wird wie auch schon zu den Figuren 6a) und 6b) erläutert durchgelassen. Die Magnetventile 780 und 782 sollen diesen Druck P1 durchlassen und werden daher nicht bestromt. Zum Druckaufbau ist schließlich noch erforderlich, dass das Spülventil 606 geschlossen ist. Dies wird erreicht, indem auch dieses Ventil nicht bestromt wird. Es liegt dann im gesamten Azimutkreis und damit an allen Azimutbremsen B1 bis B8 der Stillstandsdruck P1 zur Erzeugung des Gesamthaltemomentes *M1* an.

Im Nachführbetrieb, der immer nach einem Stillstandsbetrieb erfolgt, muss der im System noch herrschende Stillstandsdruck von 160 bar verändert werden. Die Gierbremsen B2, B4, B6 und B8 sollen im wesentlichen drucklos, die übrigen Gierbremsen bei z.B. 34 bar betrieben werden. Es werden dazu zunächst die Magnetventile 780 und 782 bestromt und dadurch beide geschlossen. Anschließend wird das zulaufseitige Zweiwegeventil 610 bestromt und somit zur Druckversorgung hin geschlossen. Es besteht keine Verbindung mehr zum Hydraulikaggregat. Gleichzeitig ist das Zweiwegeventil 610 in dieser Schaltstellung zu einem nicht dargestellten Druckbegrenzungsventil hin geöffnet, welches dem Ausgang des in der zweiten Schaltstellung befindlichen Ventils 610 nachgeschaltet ist. Dieses Druckbegrenzungsventil kann z.B. wie in Figur 6b) mit Bezugszeichen 620 oder 622 bezeichnet ausgebildet sein. Über dieses Druckbegrenzungsventil wird der Druck auf den gewünschten Nachführdruck P3, z.B. auf 34 bar, herabgesetzt. Das Spülventil 606 wird bestromt und somit geöffnet, wodurch die erste Versorgungsleitung 770 druckentlastet wird. Das Magnetventil 782 ist geschlossen, d.h. der Abfluß in den Tank 501 ist unterbunden; in der zweiten Versorgungsleitung 772 stehen daher 34 bar an. Das Magnetventil 780 ist ebenfalls geschlossen, d.h. der Druckzulauf in die erste Versorgungsleitung 770 ist unterbunden. Da die auslaufseitige Gegenseite über das Spülventil 606 zum Tank 501 hin geöffnet ist, liegen auf der ersten Versorgungsleitung 770 nahezu 0 bar an.

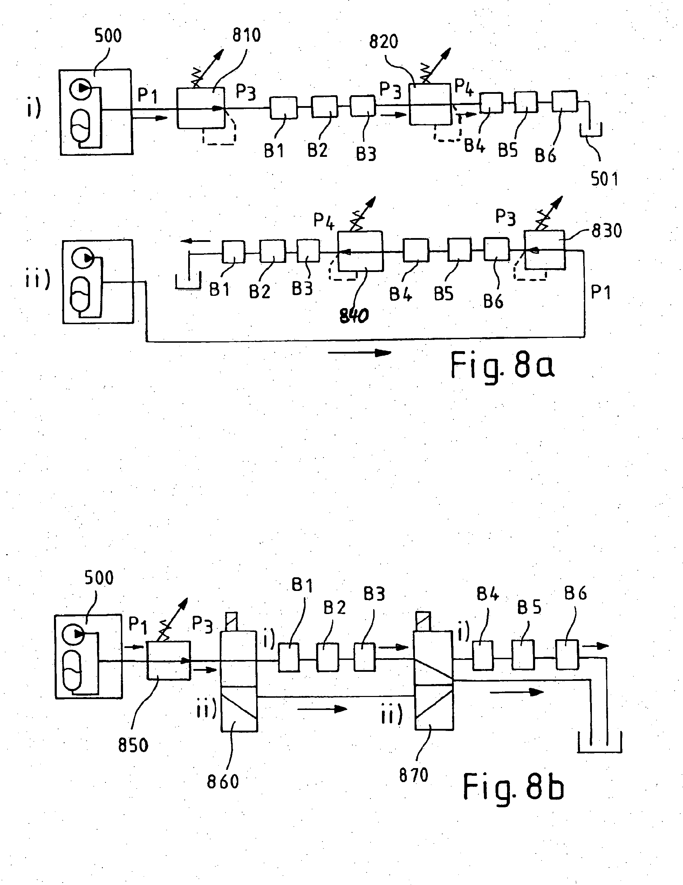

Die Figuren 8a) und 8b) zeigen in grundsätzlicher und schematischer Hinsicht Schaltungsanordnungen für die wechselnde Beaufschlagung erster und zweiter Gruppen von Gierbremsen mit einem ersten bzw. zweiten Betriebsdruck. Die Fig. 8a) zeigt in der Unterfigur i) ein Hydraulikaggregat 500, das ein erstes Stellglied 810 mit einem Betriebsdruck *P1* beaufschlagt. Bei diesem Stellglied handelt es sich um ein Druckreduzierventil, das den angelegten Betriebsdruck *P1* auf einen Betriebsdruck *P3* herunterregelt. Die dem Stellglied 810 nachgeordneten Gierbremsen B1 bis B3 werden mit dem Betriebsdruck *P3* beaufschlagt und erzeugen jeweils das Nachführhaltemoment *M3.* Der Gierbremse B3 nachgeordnet ist ein zweites Stellglied 820, bei dem es sich ebenfalls um ein Druckreduzierventil handelt, das den angelegten Betriebsdruck *P3* auf einen niedrigeren Betriebsdruck *P4* reduziert. Die diesem zweiten Stellglied nachgeordneten Gierbremsen B4 bis B6 erfahren alle den Betriebsdruck *P4* und erzeugen demzufolge ein Nachführhaltemoment *M4.* Soweit der Rückfluss in den Tank 501 drucklos erfolgt, ist *M4* = 0.

Unterfigur ii) stellt die Hydraulikkonfiguration dar, bei Umkehrung der Druckverhältnisse an den Gierbremsen B1 bis B6. Es sind dazu nicht dargestellte Schaltmittel vorhanden, um die dargestellte Umkehr der Strömungsrichtung zu bewirken. Es wird hierzu beispielhaft auf Fig. 6b) verwiesen, in der eine solche Umkehrung exemplarisch gezeigt ist. Weiterhin sind Schaltmittel vorhanden, um die Stellglieder 810 und 820 aus dem Hydraulikkreis herauszuschalten und dafür die Stellglieder 830 und 840 hinzuzuschalten. Das Stellglied 830 ist ein Druckreduzierventil, das den eingangsseitig anliegenden Betriebsdruck *P1* auf einen Betriebsdruck *P3* reduziert, der an den nachgeschalteten Gierbremsen B6, B5 und B4 anliegt, so dass diese Gierbremsen ein Nachführhaltemoment *M3* erzeugen. Der Gierbremse B3 nachgeschaltet ist ein zweites Druckreduzierventil 840, das den angelegten Betriebsdruck *P3* auf einen niedrigeren Betriebsdruck *P4* reduziert, der an den nachgeordneten Gierbremsen B3, B2 und B1 anliegt.

Eine zweite, alternative Variante zeigt Fig. 8b). Hydraulikaggregat 500 beaufschlagt Stellglied 850 mit einem Betriebsdruck *P1.* Bei dem Stellglied 850 handelt es sich um ein Druckreduzierventil, das den Betriebsdruck *P1* auf einen Betriebsdruck *P3* herabsetzt. Dem Stellglied 850 ist ein Zweiwegeventil 860 nachgeschaltet. In der dargestellten ersten Schaltstellung i) wird der Betriebsdruck *P3* durchgeleitet und die Gierbremsen B1 bis B3 mit dem Betriebsdruck P3 beaufschlagt. Ein zweites Zweiwegeventil 870 verbindet in der gezeigten Schaltstellung i) die Hydraulikleitung mit dem Tank und überbrückt die nachgeordneten Gierbremsen B4 bis B6, die Hydraulikflüssigkeit kann direkt zum Tank zurückströmen, wobei zur Aufrechterhaltung des Betriebsdruckes *P3* dieser Rückstrom durch ein geeignetes, nicht gezeigtes Stellglied, z. B. einem Rückschlagventil, unterbunden ist.

Schaltet die nicht dargestellte Steuereinrichtung das erste Zweiwegeventil 860 in die zweite Schaltstellung und das zweite Zweiwegeventil 870 ebenfalls in die zweite Schaltstellung, werden die Gierbremsen B 1 bis B3 umgangen und der Betriebsdruck P3 liegt ausschließlich an den Gierbremsen B4 bis B6 an. Die Steuereinrichtung steuert also, ob die Gierbremsen B1 bis B3 oder B4 bis B6 jeweils das Nachführhaltemoment *M3* erzeugen. Zwischen diesen beiden Fallzuständen kann z. B. alternierend zwischen aufeinanderfolgenden Nachführbewegungen hin und her geschaltet werden, um eine möglichst gleichmäßige Beanspruchung der Gierbremsen B1 bis B6 zu erreichen.

Um in den Varianten der Figuren 8a) oder 8b) an allen Gierbremsen B1 bis B6 den Stillstandsbetriebsdruck *P1* anlegen zu können, sind weitere Stellglieder oder Schaltmittel erforderlich. In grundsätzlicher Weise ist dies bereits anhand der obigen Beispiele erläutert worden, siehe z.B. die Figuren 6b) und 7a) bis 7d) nebst zugehöriger Beschreibung. Analog könnte in den Ausführungsbeispielen der Figuren 8a) und 8b) vorgegangen werden.

## Patentansprüche

1. Vorrichtung für die gesteuerte Drehung einer Maschinengondel (102) einer Windenergieanlage, mit einer Steuereinrichtung (400) und mit mehreren Azimutmotoren (128), wobei die Vorrichtung weiterhin mehrere Gierbremsen (130, B, B1 - B8) der Anzahl *n* aufweist, wobei die Steuereinrichtung (400) für einen Stillstandsbetrieb und einen Nachführbetrieb ausgebildet ist, wobei im Stillstandsbetrieb die *n* Gierbremsen (130, B, B1 - B8) für die Aufbringung eines Stillstandshaltemomentes *M1* zum Halten der Maschinengondel (102) angesteuert sind, wobei die *n* Gierbremsen (130, B, B1 - B8) dabei jeweils ein im wesentlichen gleiches erstes Haltemoment aufbringen, und wobei im Nachführbetrieb die *n* Gierbremsen (130, B, B1 -B8) für die Aufbringung eines Nachführhaltemomentes *M2* angesteuert sind, wobei das Nachführhaltemoment *M2* kleiner als das Stillstandshaltemoment *M1 (M1 > M2)* ist und auch geringer als das Gesamtdrehmoment, das die Azimutmotoren (128) im Nachführbetrieb erzeugen, wobei die Steuereinrichtung (400) im Nachführbetrieb eine Anzahl *m* der *n* Gierbremsen (130, B, B1 - B8) jeweils zur Erzeugung im Wesentlichen des gleichen konstanten Haltemomentes *M3* ansteuert, **dadurch gekennzeichnet, dass** im Nachtührbetrieb *M1*/*n > M3 > M2*/*n* ist, und wobei die übrigen *(n-m)* Gierbremsen (130, B, B1 - B8) jeweils zur Erzeugung im wesentlichen des gleichen konstanten Haltemomentes *M4* angesteuert sind, wobei *m***M3* + *(n-m)*M4* ∼= *M2* und *M1*/*n > M2*/*n > M4* gilt.

2. Vorrichtung nach Anspruch 1, **dadurch gekennzeichnet, dass** die Steuereinrichtung (400) ausgebildet ist, in einem ersten Nachführbetrieb *m* zur Erzeugung des jeweiligen Haltemomentes *M3* angesteuerte Gierbremsen (130, B, B1 - B8) in einem späteren Nachführbetrieb zur Erzeugung des jeweiligen Haltemomentes *M4* anzusteuern, und ungefähr *m* der *(n-m)* im ersten Haltebetrieb auf *M4* angesteuerte Gierbremsen (130, B, B1 - B8) in dem späteren Nachführbetrieb zur Erzeugung eines Haltemomentes *M3* anzusteuern.

3. Vorrichtung nach Anspruch 2, **dadurch gekennzeichnet, dass** der spätere und der erste Nachführbetrieb getrennt durch einen Stillstandsbetrieb unmittelbar aufeinander folgen.

4. Vorrichtung nach einem der vorhergehenden Ansprüche, **dadurch gekennzeichnet, dass** *(n-m)* ungefähr gleich *m* ist.

5. Vorrichtung nach einem der vorhergehenden Ansprüche, **dadurch gekennzeichnet, dass** *M4 ∼* = *0* gilt.

6. Vorrichtung nach einem der vorhergehenden Ansprüche, **dadurch gekennzeichnet, dass** die *m* und/oder *(n-m)* Gierbremsen (130, B, B1 - B8) im Wesentlichen symmetrisch angeordnet sind um die Drehachse (103, 730) der Maschinengondeldrehung.

7. Vorrichtung nach einem der vorhergehenden Ansprüche, wobei die Gierbremsen hydraulische Bremsen (130, B, B1 - B8) mit hydraulischer Ansteuerung sind, die in einem mit Stellgliedern (504, 505, 506, 507, 604, 606, 610, 620, 631, 710, 760, 780, 782, 810, 820, 850, 860, 870) ausgestatteten Hydraulikversorgungskreis angeordnet sind, und wobei die Vorrichtung ein Hydraulikaggregat (500) aufweist, **dadurch gekennzeichnet, dass** die Steuereinrichtung (400) ausgebildet ist, die Stellglieder (504, 505, 506, 507, 604, 606, 610, 620, 631, 710, 760, 780, 782, 810, 820, 850, 860, 870) für den Stillstandsbetrieb derart anzusteuern, dass alle Gierbremsen (130, B, B1 - B8) mit einem Stillstandsbetriebsdruck *P1* versorgt sind, und die Stellglieder (504, 505, 506, 507, 604, 606, 610, 620, 631, 710, 760, 780, 782, 810, 820, 850, 860, 870) für den Nachführbetrieb derart anzusteuern, dass *m* Gierbremsen (130, B, B1 - B8) mit einem Betriebsdruck *P3* und *(n-m)* Gierbremsen (130, B, B1 - B8) mit einem Betriebsdruck *P4* versorgt sind.

8. Vorrichtung nach Anspruch 7, **dadurch gekennzeichnet, dass** die Gierbremsen (B1 - B8) in zwei getrennten stellgliedbeherrschten Hydraulikkreisen angeordnet sind, wobei im ersten Hydraulikkreis *m* Gierbremsen (B2, B4, B6, B8) und im zweiten Hydraulikkreis *(n-m)* Gierbremsen (B1, B3, B5, B7) seriell angeordnet sind.

9. Vorrichtung nach Anspruch 7, **dadurch gekennzeichnet, dass** die *n* Gierbremsen (B1 - B8) seriell in einer doppelten Ringleitung angeordnet sind, wobei jede Ringleitung stellgliedbeherrscht ist.

10. Vorrichtung nach einem der vorhergehenden Ansprüche 7 bis 9, **dadurch gekennzeichnet, dass** im Hydraulikkreis zwischen der ersten und n-ten Gierbremse (B1 - B8) lediglich Stellglieder (620, 710, 760) angeordnet sind, welche nicht von der Steuereinrichtung (400) angesteuert werden.

11. Vorrichtung nach Anspruch 10, wobei alle Gierbremsen (B1 - B8) seriell in einem Hydraulikkreis angeordnet sind, **dadurch gekennzeichnet, dass** zwischen der *m.ten* und der (*m*+1).ten Gierbremsen als Stellglied (620) ein Druckbegrenzungsventil (622) mit parallel geschaltetem Rückschlagventil (621) angeordnet ist, wobei die Sperrrichtung des Rückschlagventils (621) der Öffnungsrichtung des Druckbegrenzungsventils (622) entspricht, und wobei weiterhin im Hydraulikkreis Stellglieder (606, 610, 620, 631) und Hydraulikleitungen derart vorgesehen und von der Steuereinrichtung (400) angesteuert sind, dass im Stillstandsbetrieb der Stillstandsbetriebsdruck *P1* unter Umgehung des Druckbegrenzungsventils (622) durch das Rückschlagventil (621) hindurch an allen *n* Gierbremsen (B1 - B4) anliegt, wobei im Nachführbetrieb der Betriebsdruck *P3* an den *m* Gierbremsen (B3, B4) bis zum Druckbegrenzungsventil (622) anliegt unter Umgehung des Rückschlagventils (621).

12. Vorrichtung nach Anspruch 11, **dadurch gekennzeichnet, dass** zusätzlich zum Hydraulikaggregat (500) ein Druckspeicher (630) im Hydraulikkreis angeordnet ist, dessen Druckeinspeisepunkt in der Strömungsrichtung des Nachführbetriebs vor dem Druckbegrenzungsventil (622) liegt.

## Claims

1. An apparatus for the controlled rotation of a machine pod (102) of a wind power plant, comprising a control device (400) and comprising a plurality of azimuth motors (128), wherein the apparatus furthermore encompasses a plurality of yaw brakes (130, B, B1 - B8) amounting to *n* in number, wherein the control device (400) is embodied for a standstill operation and for a tracking operation, wherein in standstill operation, the *n* yaw brakes (130, B, B1 - B8) are actuated so as to apply a standstill holding moment *M1* for holding the machine pod (102), wherein the *n* yaw brakes (130, B, B1 - B8) in each case apply a substantially equal first holding moment, and wherein in tracking operation, the *n* yaw brakes (130, B, B1 - B8) are actuated so as to apply a tracking holding moment *M2,* wherein the tracking holding moment *M2* is lower than the standstill holding moment *M1 (M1 > M2)* and is also lower than the overall torque generated by the azimuth motors (128) in the tracking operation, wherein the control device (400), in tracking the operation, actuates a number *m* of the *n* yaw brakes (130, B, B1 - B8) in each case so as to generate substantially the same constant holding moment *M3,* **characterised in that**, in the tracking operation, *M1*/*n > M3 > M2*/*n,* and wherein the other *(n-m)* yaw brakes (130, B, B1 - B8) are actuated in each case so as to generate substantially the same constant holding moment *M4,* wherein *m*M3* + *(n-m)*M4 ∼= M2* and *M1*/*n > M2*/*n > M4* applies.

2. The apparatus according to claim 1, **characterised in that** the control device (400) is embodied to actuate yaw brakes (130, B, B1 - B8) in a first tracking operation *m* so as to generate the respective holding moment *M3,* in a later tracking operation so as to generate the respective holding moment *M4,* and to actuate approximately *m* of the *(n-m)* yaw brakes (130, B, B1 - B8), which are actuated to *M4* in the first holding operation so as to generate a holding moment *M3* in the later tracking operation.

3. The apparatus according to claim 2, **characterised in that** the later and the first tracking operation follow one another immediately, separated by a standstill operation.

4. The apparatus according to any one of the preceding claims, **characterised in that** *(n-m)* approximately equals *m.*

5. The apparatus according to any one of the preceding claims, **characterised in that** *M4∼=0* applies.

6. The apparatus according to any one of the preceding claims, **characterised in that** the *m* and/or *(n-m)* yaw brakes (130, B, B1 - B8) are arranged substantially symmetrically around the axis of rotation (103, 730) of the machine pod rotation.

7. The apparatus according to any one of the preceding claims, wherein the yaw brakes are hydraulic brakes (130, B, B1 - B8) comprising a hydraulic actuation, which are arranged in a hydraulic supply circuit, which is equipped with actuators (504, 505, 506, 507, 604, 606, 610, 620, 631, 710, 760, 780, 782, 810, 820, 850, 860, 870), and wherein the apparatus encompasses a hydraulic aggregate (500), **characterised in that** control device (400) is embodied to actuate the actuators (504, 505, 506, 507, 604, 606, 610, 620, 631, 710, 760, 780, 782, 810, 820, 850, 860, 870) for the standstill operation such that all of the yaw brakes (130, B, B1 - B8) are supplied with a standstill operating pressure *P1,* and actuate the actuators (504, 505, 506, 507, 604, 606, 610, 620, 631, 710, 760, 780, 782, 810, 820, 850, 860, 870) for the tracking operation such that *m* yaw brakes (130, B, B1 - B8) are supplied with an operating pressure *P3* and *(n-m)* yaw brakes (130, B, B1-B8) are supplied with an operating pressure *P4.*

8. The apparatus according to claim 7, **characterised in that** the yaw brakes (B1-B8) are arranged in two separate actuator-controlled hydraulic circuits, wherein *m* yaw brakes (B2, B4, B6, B8) are arranged in the first hydraulic circuit and (*n-m*) yaw brakes (B1, B3, B5, B7) are arranged in series in the second hydraulic circuit.

9. The apparatus according to claim 7, **characterised in that** the *n* yaw brakes (B1 - B8) are arranged in series in a double ring line, wherein each ring line is actuator-controlled.

10. The apparatus according to any one of the preceding claims 7 to 9, **characterised in that** only actuators (620, 710, 760), which are not actuated by the control device (400), are arranged in the hydraulic circuit between the first and n-th yaw brake (B1 - B8).

11. The apparatus according to claim 10, wherein all of the yaw brakes (B1 - B8) are arranged in series in a hydraulic circuit, **characterised in that** a pressure limiting valve (622) comprising a non-return valve (621), which is connected in parallel, is arranged between the *m.th* and the (*m*+*1*).th yaw brake as actuator (620), wherein the blocking direction of the non-return valve (621) corresponds to the opening direction of the pressure limiting valve (622), and wherein provision is furthermore made in the hydraulic circuit for actuators (606, 610, 620, 631) and hydraulic lines such and are controlled by the control device (400) that, in standstill operation, the standstill operating pressure *P1* is applied to all *n* yaw brakes (B1 - B4) through the non-return valve (621) by bypassing the pressure limiting valve (622), wherein, in the tracking operation, the operating pressure *P3* at the *m* yaw brakes (B3, B4) is applied up to the pressure limiting valve (622) by passing the non-return valve (621).

12. The apparatus according to claim 11, **characterised in that** in addition to the hydraulic aggregate (500), a pressure reservoir (630), the pressure feeding point of which is located in the flow direction of the tracking operation upstream of the pressure limiting valve (622), is arranged in the hydraulic circuit.

## Revendications

1. Dispositif de giration contrôlée de la nacelle (102) d'une éolienne, avec un système de commande (400) et plusieurs moteurs d'orientation azimutale (128), le dispositif présentant en outre plusieurs freins de giration (130, B, B1 - B8) en nombre *n*, le système de commande (400) étant conçu pour assurer un service en mode fixe et un service en mode asservi, les *n* freins de giration (130, B, B1 - B8) étant, lors du service en mode fixe, commandés de façon à produire un couple d'arrêt en mode fixe *M1* pour immobiliser la nacelle (102), les *n* freins de giration (130, B, B1 - B8) appliquant alors chacun un premier couple d'arrêt sensiblement identique, et les *n* freins de giration (130, B, B1 - B8) étant, lors du service en mode asservi, commandés de façon à produire un couple d'arrêt en mode asservi *M2*, le couple d'arrêt en mode asservi *M2* étant inférieur au couple d'arrêt en mode fixe *M1* (*M1 > M2)* et également inférieur au couple de rotation total produit par les moteurs d'orientation azimutale (128) en mode asservi, le système de commande (400) commandant en mode asservi un nombre *m* des *n* freins de giration (130, B, B1 - B8) pour qu'ils produisent respectivement un couple d'arrêt constant sensiblement identique *M3,* **caractérisé en ce que,** en mode asservi, on a *M1*/*n > M3 > M2*/*n,* les autres (*n - m*) freins de giration (130, B, B1 - B8) étant respectivement commandés de façon à produire un couple d'arrêt constant sensiblement identique *M4* de sorte que l'on a *m*M3* + *(n - m*)*M4 ∼= *M2* et *M1*/*n > M2*/*n > M4.*

2. Dispositif selon la revendication 1, **caractérisé en ce que** le système de commande (400) est conçu de façon telle que les *m* freins de giration (130, B, B1 - B8) qui, au cours d'un premier service en mode asservi, avaient été commandés de façon à appliquer respectivement le couple d'arrêt *M3,* sont commandés au cours d'un service en mode asservi ultérieur pour appliquer respectivement le couple d'arrêt *M4,* et qu'environ *m* des (*n - m*) freins de giration (130, B, B1 - B8) qui, au cours du premier service en mode fixe, avaient été commandés pour appliquer le couple *M4*, sont commandés au cours du service en mode asservi ultérieur de façon à appliquer le couple d'arrêt *M3.*

3. Dispositif selon la revendication 2, **caractérisé en ce que** le service ultérieur en mode asservi et le premier service en mode asservi se succèdent immédiatement en étant séparés par un service en mode fixe.

4. Dispositif selon l'une des revendications précédentes, **caractérisé en ce que** (*n - m*) est approximativement égal à *m.*

5. Dispositif selon l'une des revendications précédentes, **caractérisé en ce que** *M4* ∼= 0.

6. Dispositif selon l'une des revendications précédentes, **caractérisé en ce que** les *m* et/ou (*n - m*) freins de giration (130, B, B1 - B8) sont agencés de façon essentiellement symétrique autour de l'axe de rotation (103, 730) de la nacelle.

7. Dispositif selon l'une des revendications précédentes, les freins de giration étant des freins hydrauliques (130, B, B1 - B8) à commande hydraulique agencés dans un circuit de distribution hydraulique équipé d'actionneurs (504, 505, 506, 507, 604, 606, 610, 620, 631, 710, 760, 780, 782, 810, 820, 850, 860, 870) et le dispositif présentant un groupe hydraulique (500), **caractérisé en ce que** le système de commande (400) est conçu pour commander les actionneurs (504, 505, 506, 507, 604, 606, 610, 620, 631, 710, 760, 780, 782, 810, 820, 850, 860, 870) pour le service en mode fixe de façon telle que tous les freins de giration (130, B, B1 - B8) sont alimentés avec une pression en mode fixe *P1,* et pour commander les actionneurs (504, 505, 506, 507, 604, 606, 610, 620, 631, 710, 760, 780, 782, 810, 820, 850, 860, 870) pour le service en mode asservi de façon telle que *m* freins de giration (130, B, B1 - B8) sont alimentés avec une pression de service *P3* et (*n - m)* freins de giration (130, B, B1 - B8) avec une pression de service *P4*.

8. Dispositif selon la revendication 7, **caractérisé en ce que** les freins de giration (B1 - B8) sont agencés dans deux circuits hydrauliques séparés contrôlés par des actionneurs, *m* freins de giration (B2, B4, B6, B8) étant agencés en série dans le premier circuit hydraulique et (*n - m)* freins de giration (B1, B3, B5, B7) étant agencés en série dans le second circuit hydraulique.

9. Dispositif selon la revendication 7, **caractérisé en ce que** les *n* freins de giration (B1 - B8) sont agencés en série dans une conduite circulaire double, chaque conduite circulaire étant également contrôlée par des actionneurs.

10. Dispositif selon l'une des revendications précédentes 7 à 9, **caractérisé en ce que,** dans le circuit hydraulique entre le premier et le *n*-ième frein de giration (B1 - B8), sont uniquement agencés des actionneurs (620, 710, 760) non commandés par le système de commande (400).

11. Dispositif selon la revendication 10, tous les freins de giration (B1 - B8) étant agencés en série dans un circuit hydraulique, **caractérisé en ce que** entre le *m*-ième et le (*m* + *i*)-ième frein de giration est agencé en guise d'actionneur (620) une soupape de limitation de pression (622) avec une soupape de retenue (621) raccordée en parallèle, le sens d'arrêt de la soupape de retenue (621) correspondant au sens de passage de la soupape de limitation de pression (622), des actionneurs (606, 610, 620, 631) et des conduites hydrauliques étant en outre prévus et commandés par le système de commande (400) de façon telle que, en service en mode fixe, la pression en mode fixe *P1* est appliquée à tous les *n* freins de giration (B1 - B4) à travers la soupape de retenue (621) en contournant la soupape de limitation de pression (622), et en service en mode asservi, la pression de service P3 est appliquée à tous les *m* freins de giration (B3, B4) jusqu'à la soupape de limitation de pression (622) en contournant la soupape de retenue (621).

12. Dispositif selon la revendication 11, **caractérisé en ce que** le circuit hydraulique présente, en plus du groupe hydraulique (500), un accumulateur de pression (630) dont le point d'alimentation en pression est placé avant la soupape de limitation de pression (622) dans le sens d'écoulement du service en mode asservi.
